# FASCICULE DE BREVET EUROPEEN

(11) **EP 2 180 423 B1**
(45) Date de publication et mention de la délivrance du brevet: **26.07.2017**
(21) Numéro de dépôt: 09171030.1
(22) Date de dépôt: 22.09.2009
(51) Int. Cl.: G06F 21/12, G06F 21/62

(54) **Controle de l'utilisation de machines virtuelles**
Kontrolles für die Benützung von virtuellen Maschinen
Control of the use of virtual machines

(30) Priorité: 16.10.2008 FR 0857034
(43) Date de publication de la demande: 28.04.2010
(73) Titulaire: ALCATEL LUCENT, 92100 Boulogne-Billancourt (FR)
(72) Inventeur: Bulut, Evren, 57290, Fameck (FR); L'Haridon, Sylvain, 91620, Nozay (FR)
(74) Mandataire: Berthier, Karine

(56) Documents cités:
- EP-A- 1 612 642
- US-A1- 2001 011 253
- US-A1- 2002 062 449
- US-A1- 2005 050 315
- US-A1- 2007 240 233
- ANONYMOUS: "Privilege User's Guide - Version 2.0" PRIVILEGE SECURE SOFTWARE DISTRIBUTION USER'S GUIDE, XX, XX, 1 juin 2001 (2001-06-01), page complete, XP002209452

## Description

La présente invention concerne le contrôle de l'utilisation de machines virtuelles. Plus particulièrement, l'invention concerne l'autorisation de l'exécution de répliques de machines virtuelles.

Une machine virtuelle est un conteneur totalement isolé qui est installé dans une machine physique et qui peut exécuter son propre système d'exploitation et ses propres applications. Une machine virtuelle se comporte comme un ordinateur physique et utilise les ressources de la machine physique, telles que le processeur, la mémoire vive et la mémoire de stockage.

Une machine virtuelle est entièrement composée de logiciels et ne contient aucun composant matériel. En conséquence, les machines virtuelles offrent de nombreux avantages par rapport aux matériels physiques, tels que la diminution du coût des matériels informatiques, la réduction de l'espace et de la consommation d'énergie, ou encore la réutilisation de matériel déjà existant.

Les machines virtuelles peuvent partager les ressources physiques d'un même ordinateur tout en demeurant insolées les unes des autres comme si les machines virtuelles étaient des machines physiquement séparées. Si, par exemple, quatre machines virtuelles sont présentes sur une même machine physique et si l'une des machines virtuelles tombe en panne, les trois autres machines virtuelles demeurent disponibles. Une machine virtuelle peut être considérée comme un conteneur de logiciels contenant un ensemble complet de ressources matérielles virtuelles, avec un système d'exploitation et des applications. Cette structure favorise la portabilité des machines virtuelles. Par exemple, une machine virtuelle peut être copiée comme un fichier d'un logiciel, depuis un emplacement vers un autre emplacement, par exemple dans un support de stockage de données standard.

Pour de nombreux vendeurs de machines virtuelles, la réplication de machines virtuelles est un argument commercial important pour vendre ces machines virtuelles. Une machine virtuelle peut être répliquée facilement et la machine virtuelle répliquée peut être déployée dans une autre machine physique.

Cependant, des machines virtuelles et leurs applications peuvent être répliquées en outrepassant les protections usuelles des licences de logiciel. Certains mécanismes existent pour refuser l'utilisation illicite de machines virtuelles répliquées.

Des clés de licence n'empêchent pas la copie de machine virtuelle et la réutilisation de cette dernière avec les applications embarquées. Dés que la clé de licence est utilisée, l'application dans la machine virtuelle est enregistrée et peut être utilisée. Ensuite, la machine virtuelle peut être répliquée et utilisée sans qu'une autre de de licence ne soit requise.

Des certificats de licence, qui sont souvent des solutions propriétaires et non standardisées, sont délivrés avec la machine virtuelle. Lorsqu'une machine virtuelle est répliquée, elle peut être réutilisée sur une autre machine physique utilisant le même certificat ou une copie de ce certificat.

Des serveurs distants d'accord de licence requièrent une connexion distante avec des machines virtuelles ayant une licence afin d'obtenir une autorisation d'utilisation. En outre, ces serveurs doivent satisfaire une politique particuliére de gestion de licences. En particulier, une licence délivrée a une durée de validité et dès que cette durée est expirée, la machine virtuelle doit communiquer avec un serveur de licence afin de renouveler la licence de la machine virtuelle. Dans d'autres cas, une fois que la machine virtuelle a obtenu une licence, l'application n'a plus besoin de communiquer avec le serveur de licence puisque la licence n'a pas de durée de validité. La machines virtuelle peut alors être copiée et réutilisée sans autorisation.

Un manque de gestion de licence efficace et appropriée contre la réplication illicite de machines virtuelles conduit à une utilisation illicite de répliques de machines virtuelles et réduit les bénéfices des vendeurs de machines virtuelles.

Le document EP-1612642-A2 divulgue un système permettant de collecter des revenus de licence pour des applications logicielles exécutées dans un environnement virtualisé,

Le document US2001/0011253-A1 divulgue un système pour automatiquement traquer l'utilisation de logiciel ainsi que pour déterminer que ce logiciel est correctement licencié.

Un objectif de l'invention est de remédier aux inconvénients précédents en améliorant le contrôle de l'utilisation de machines virtuelles dans un dispositif informatique afin d'interdire l'utilisation de toute réplique de machine virtuelle dont la licence n'est pas valide.

Pour atteindre cet objectif, un procédé pour contrôler l'exécution d'au moins une répliquées d'une machine virtuelle dans un dispositif informatique, est caractérisé en ce qu'il comprend les étapes suivantes :
suite au lancement de l'exécution de la réplique de la machine virtuelle, transmettre une première requête comprenant au moins une signature et un identificateur de la machine virtuelle depuis le dispositif informatique à un dispositif de sécurité associé au dispositif informatique, et
si le nombre de répliques de la machine virtuelle en fonctionnement est inférieur à un nombre prédéterminé, si la signature est valide et si l'identificateur de la machine virtuelle est conforme à un identificateur mémorisé dans le dispositif de sécurité, transmettre une première réponse incluant des instructions pour autoriser l'exécution de la réplique de la machine virtuelle depuis le dispositif de sécurité au dispositif informatique.

Avantageusement, l'invention permet de contrôler l'utilisation de machines virtuelles et notamment d'interdire l'exécution d'une réplique d'une machine virtuelle dont la licence n'est pas valide. Dès le démarrage, c'est-à-dire le lancement de l'exécution, d'une réplique de la machine virtuelle, l'exécution de cette dernière est autorisée si la machine virtuelle a une licence valide et si le nombre de répliques de la machine virtuelle qui sont autorisées à fonctionner n'est pas déjà atteint. Une première vérification de validité de licence est donc effectuée lors du démarrage d'une réplique d'une machine virtuelle.

Selon une autre caractéristique de l'invention, le procédé peut comprendre en outre les étapes suivantes :
suite au lancement de l'exécution d'une application de la réplique de la machine virtuelle, transmettre une deuxième requête comprenant au moins ladite signature, un identificateur de la machine virtuelle et un identificateur de l'application, depuis le dispositif informatique au dispositif de sécurité, et
si la signature est valide et si les identificateurs de la machine virtuelle et de l'application sont conformes à des identificateur mémorisés dans le dispositif de sécurité, transmettre une deuxième réponse incluant des instructions pour autoriser l'exécution de l'application depuis le dispositif de sécurité au dispositif informatique.

Dès le démarrage d'une application d'une réplique de la machine virtuelle, l'exécution de cette dernière est autorisée si la machine virtuelle a une licence valide et également si l'application a une licence valide. Une deuxième vérification de validité de licence est donc effectuée lors du démarrage d'une applications d'une réplique d'une machine virtuelle.

Selon une autre caractéristique de l'invention, le procédé peut comprendre en outre en outre les étapes suivantes :
à la fin d'un intervalle de temps prédéterminé, transmettre une troisième requête comprenant au moins ladite signature, un identificateur de la machine virtuelle. au moins un identificateur d'une application relative à la réplique de la machine virtuelle et une date courante, depuis le dispositif informatique au dispositif de sécurité, et
si la signature est valide, si les identificateurs de la machine virtuelle et de l'application sont conformes à des identificateur mémorisés dans le dispositif de sécurité, et si la date courante correspond à une date obtenue en fonction de l'intervalle de temps prédéterminé et de la date de transmission de la première réponse, transmettre une troisième réponse incluant des instructions pour autoriser l'exécution de l'application depuis le dispositif de sécurité au dispositif informatique.

Après un délai prédéterminé, la poursuite de l'exécution d'une réplique de la machine virtuelle et d'au moins l'une de ses applications est autorisée si la machine virtuelle et l'application ont des licences valides et si la date courante de vérification de licence est bien la date attendue par rapport à la date de la dernière vérification de licence. Une troisième vérification de validité de licence est donc effectuée à l'expiration d'un délai prédéterminé.

L'invention concerne également un dispositif informatique implémentant au moins une réplique d'une machine virtuelle, caractérisé en ce qu'il comprend :
des moyens pour transmettre une première requête comprenant au moins une signature et un identificateur de la machine virtuelle à un dispositif de sécurité associé au dispositif informatique, et
des moyens pour autoriser l'exécution de la réplique de la machine virtuelle en fonction d'instructions incluses dans une première réponse qui est transmise par le dispositif de sécurité si le nombre de répliques de la machine virtuelle en fonctionnement est inférieur à un nombre prédéterminé, si la signature est valide et si l'identificateur de la machine virtuelle est conforme à un identificateur mémorisé dans le dispositif de sécurité.

L'invention concerne encore un dispositif de sécurité associé à un dispositif informatique implémentant au moins une réplique d'une machine virtuelle, caractérisé en ce qu'il comprend :
des moyens pour recevoir une première requête qui comprend au moins une signature et un identificateur de la machine virtuelle et qui est transmise depuis le dispositif informatique, et
des moyens pour transmettre une première réponse incluant des instructions pour autoriser l'exécution de la réplique de la machine virtuelle au dispositif informatique, si le nombre de répliques de la machine virtuelle en fonctionnement est inférieur à un nombre prédéterminé, si la signature est valide et si identificateur de la machine virtuelle est conforme à un identificateur mémorisé dans le dispositif de sécurité.

La présente invention et les avantages qu'elle procure seront mieux compris au vu de la description ci-après faite en référence aux figures annexées, dans lesquelles :
- la figure 1 est un bloc-diagramme schématique d'un système de contrôle de l'utilisation de machines virtuelles dans un dispositif hôte selon l'invention;
- la figure 2 est un bloc-diagramme schématique d'une machine virtuelle dans un dispositif hôte selon l'invention;
- la figure 3 est un bloc-diagramme schématique d'un dispositif de sécurité selon l'invention; et
- la figure 4 est un algorithme d'un procédé de contrôle d'utilisation de machines virtuelles selon l'invention.

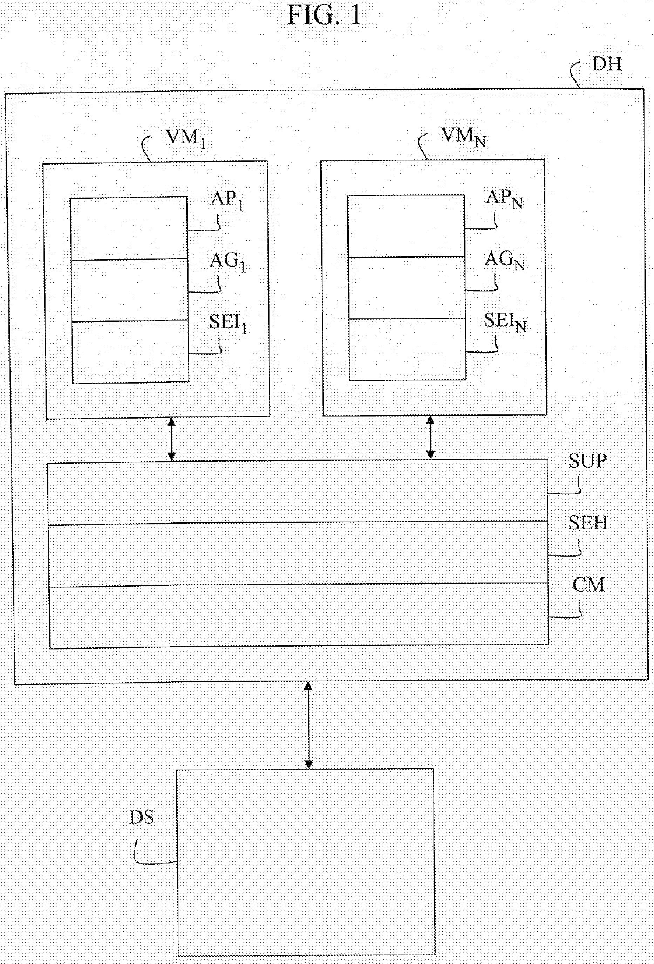

En référence à la figure 1, un système de contrôle de l'utilisation de machines virtuelles selon une réalisation de l'invention comprend un dispositif hôte DH et un dispositif de sécurité DS.

Le dispositif hôte DH et le dispositif de sécurité DS sont associés, c'est-à-dire peuvent être connectés entre eux via une liaison filaire ou sans fil. Par exemple, le dispositif de sécurité DS est une carte à puce avec ou sans contact qui peut être connectée via un lecteur approprié au dispositif hôte DH.

Le dispositif hôte DH et le dispositif de sécurité DS communiquent entre eux par exemple via un lecteur de carte à puce, intégré dans le dispositif hôte DH ou relié à ce dernier. Une communication entre le dispositif hôte DH et le dispositif de sécurité DS est établie après une authentification mutuelle sécurisée au moyen de dés d'authentification partagées. Ces clés d'authentification empêchent toute exécution du dispositif de sécurité DS avec un dispositif différent du dispositif hôte DH. Tous les messages échangés entre le dispositif hôte DH et le dispositif de sécurité DS sont chiffrés à l'aide de clés publiques et privées et d'un algorithme de chiffrement.

Le dispositif de sécurité DS est un dispositif sécurisé, inviolable, qui implémente un concept d'isolation d'exécution de processus. Le dispositif de sécurité DS est par exemple une carte à puce amovible, également dite carte à microcontrôleur ou carte à circuit intégré, avec ou sans contact, accessible depuis le dispositif hôte DH via un moyen de communication, par exemple de type radio fréquence. Selon un autre exemple, le dispositif de sécurité est un module matériel de sécurité HSM ("Hardware Security Module" en anglais) ayant des fonctions cryptographiques, et peut être du type carte électronique enfichable embarquée dans le routeur ou du type boîtier externe connecté au routeur via une liaison avec ou sans contact.

Le dispositif hôte DH est par exemple un ordinateur personnel ou un serveur d'applications.

Le dispositif hôte DH comprend une couche matérielle CM, un système d'exploitation hôte SEH, un superviseur SUP, et au moins une machine virtuelle.

La couche matérielle CM comprend différentes ressources matérielles, telles qu'un processeur, de la mémoire vive et de la mémoire de stockage.

Le système d'exploitation hôte SEH est un ensemble de programmes assurant une liaison entre les ressources matérielles du dispositif de sécurité DS et des applications, telles que le superviseur SUP.

Le superviseur SUP gère des machines virtuelles VM₁ à VM_{N}, N étant un entier généralement inférieur à dix. Le superviseur SUP présente plusieurs abstractions ou vues du dispositif hôte, de sorte que les ressources matérielles du dispositif hôte apparaissent comme des machines virtuelles indépendantes. Le superviseur gère l'allocation des ressources du dispositif hôte pour chacune des machines virtuelles.

Chaque machine virtuelle VM₁, VM_{N} comprend au moins un ensemble d'application AP₁, AP_{N}, un agent de licence AG₁, AG_{N} et un système d'exploitation invité SEI₁, SEI_{N}. Chaque machine virtuelle peut exécuter son propre système d'exploitation et une ou plusieurs applications. Chaque machine virtuelle peut être répliquées en une ou plusieurs répliques de machine virtuelle. La machine virtuelle sert alors de référence aux répliques de la machine virtuelle et est elle-même considérée comme une réplique de machine virtuelle.

L'agent de licence AG₁, AG_{N} interagit avec le dispositif de sécurité DS qui gère des données de licence. En fonction de données de licence fournies par le dispositif de sécurité DS, l'agent peut autoriser une réplique de machine virtuelle à démarrer, et une fois la réplique de la machine virtuelle démarrée, l'agent contrôle des droits d'utilisation d'applications exécutées par la réplique de la machine virtuelle.

Le dispositif de sécurité DS a un rôle de serveur et chaque agent de licence inclus dans une réplique de la machine virtuelle respective a un rôle de client. L'agent, c'est-à-dire le client, transmet des requêtes au dispositif de sécurité, c'est-à-dire le serveur, qui génère une réponse. Le dispositif de sécurité ne génère pas de requête ou de réponse de sa propre initiative.

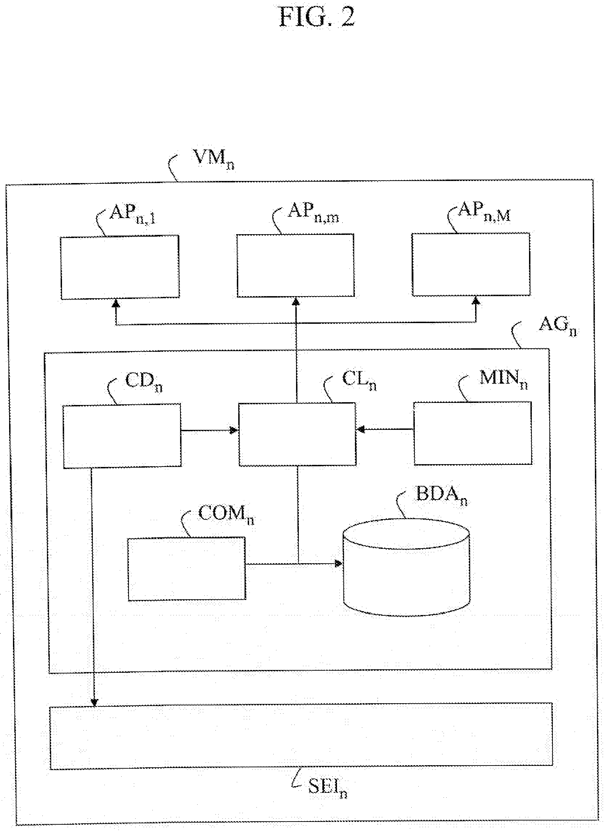

En référence à la figure 2, une machine virtuelle VMₙ, avec 1 ≤ n ≤ N, comprend une ou plusieurs applications AP_{n,m}, avec 1 ≤ m ≤ M, un agent AGₙ, et un système d'exploitation invité SEIₙ. Il sera entendu qu'une réplique de la machine virtuelle a une structure similaire à celle de la machine virtuelle. Par exemple, si une machine virtuelle donnée est répliquée une fois, c'est-à-dire en deux répliques, alors les deux répliques de machine virtuelle peuvent être exécutées simultanément et comprennent chacune un agent, un système d'exploitation invité et une ou plusieurs applications qui peuvent être identiques ou différentes. Une machine virtuelle est ainsi définie fonctionnellement par rapport au système d'exploitation invité et les applications qu'elle supporte. Lorsqu'une réplique de machine virtuelle est exécutée, elle devient une réplique parmi les N autres répliques de la machine virtuelle.

Un agent AGₙ comprend un collecteur de données CDₙ, un contrôleur de licence CLₙ, un minuteur MINₙ, un module de communication COMₙ, et une base de données d'agent BDAₙ.

Le collecteur de données CDₙ interagit avec le système d'exploitation invité SEIₙ pour récupérer différentes informations, telles qu'une adresse IP ("Internet Protocol" en anglais) de la machine virtuelle VMₙ.

Le contrôleur de licence CLₙ autorise ou refuse le démarrage de la machine virtuelle VMₙ en fonction de données de licence transmises par le dispositif de sécurité DS. Si la machine virtuelle VMₙ est démarrée, le contrôleur de licence CLₙ peut autoriser l'exécution d'applications AP_{n,m}.

Le minuteur MINₙ est en charge de déclencher un contrôle de licence en fonction d'un intervalle de temps aléatoire généré par le dispositif de sécurité DS. Lorsque l'intervalle de temps aléatoire est écoulé, le minuteur transmet une requête au contrôleur de licence CLₙ pour déclencher un contrôle de licence.

Le module de communication COMₙ établit une authentification sécurisée entre l'agent AGₙ et le dispositif de sécurité DS en utilisant des clés d'authentification mémorisées dans la base de données d'agent BDAₙ.

La base de données d'agent BDAₙ comprend des informations relatives à l'invention, telles que des données de sécurité qui sont relatives au dispositif hôte DH et qui incluent notamment des clés privées et publiques de l'agent AGₙ, des clés d'authentification et la clé publique du dispositif de sécurité DS.

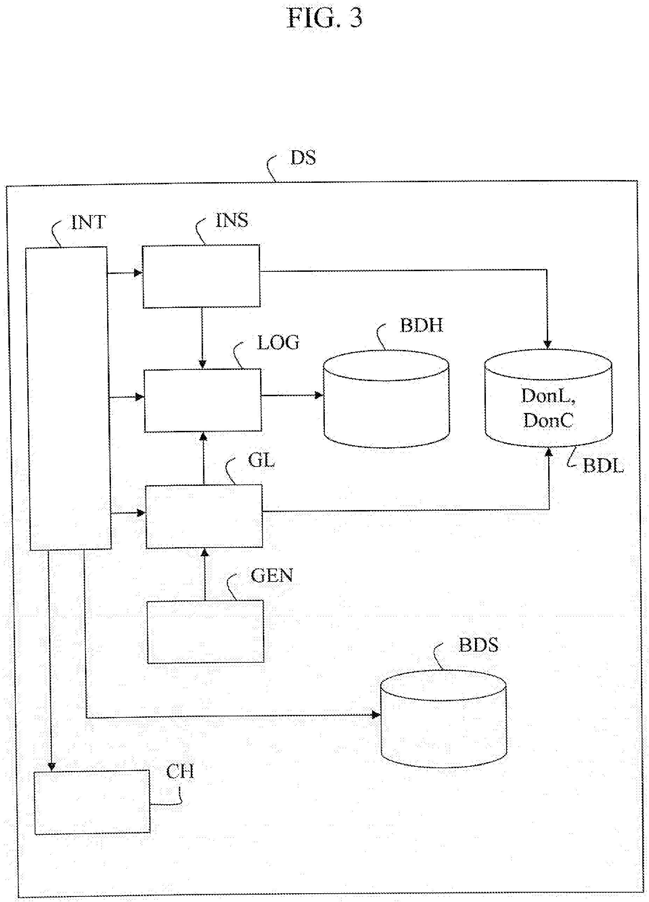

En référence à la figure 3, le dispositif de sécurité DS comprend une interface INT, un installateur de licence INS, un gestionnaire d'historique LOG, un gestionnaire de licences GL, un générateur de délais aléatoires GEN, un module de chiffrement CH et une base de données de sécurité BDS. Le dispositif de sécurité DS comprend en outre une base de données d'historique BDH, une base de données de licences BDL et une base de données de sécurité BDS.

L'interface INT établit une authentification sécurisée entre un agent AGₙ et le dispositif de sécurité DS en utilisant des clés d'authentification mémorisées dans la base de données de sécurité BDS.

La base de données de sécurité BDS comprend des données de sécurité qui sont relatives au dispositif de sécurité DS et qui incluent notamment des clés privées et publiques de l'agent du dispositif de sécurité DS, des clés d'authentification, la clé publique du vendeur des machines virtuelles et les clés publiques des différents agents du dispositif de sécurité.

L'interface INT commande l'installateur de licence INS, le gestionnaire d'historique LOG, le gestionnaire de licences GL ou le module de chiffrement CH pour autoriser l'utilisation d'une machine virtuelle dans le dispositif hôte DH en fonction d'une requête de l'agent associé à la machine virtuelle.

L'interface INT collabore avec le module de chiffrement CH pour chiffrer et déchiffrer des messages. Tous les messages générés dans le dispositif de sécurité DS peuvent être chiffrés en utilisant une clé privée du dispositif de sécurité et tous les messages transmis par un agent du dispositif hôte peuvent être déchiffrés en utilisant une clé publique de l'agent. Le module de chiffrement CH assure différents mécanismes de cryptographie, tels que le chiffrement et le déchiffrement de messages et les authentifications entre le dispositif de sécurité et le dispositif hôte.

L'installateur de licence INS est utilisé lors de la personnalisation du dispositif de sécurité DS par le vendeur de ce dernier. Selon un contrat passé entre le vendeur et le client, qui sont supposés être respectivement le possesseur initial et l'utilisateur du dispositif hôte DH, l'installateur INS mémorise des droits de licences dans la base de données de licences BDL. Si le client souhaite obtenir de nouvelles fonctionnalités, telles que de nouvelles applications pour des machines virtuelles, de nouveaux droits de licence peuvent être ajoutés à la base de données de licences BDL par le vendeur.

Le gestionnaire de licences GL traite toutes les requêtes transmises par les agents du dispositif hôte DH. Le gestionnaire de licences GL délivre des droits pour des applications en fonction de données mémorisées dans la base de données de licences BDL. Le gestionnaire de licences GL vérifie et gère le nombre de répliques de machines virtuelles en fonctionnement dans le dispositif hôte.

Le générateur de délais aléatoires GEN génère un intervalle de temps aléatoire et le transmet au gestionnaire de licences GL lorsqu'une réponse est à transmettre à un agent.

L'interface INT, l'installateur de licencie INS et le gestionnaire de licences GL collaborent avec le gestionnaire d'historique LOG afin que ce dernier mémorise un historique de toutes les opérations effectuées par le dispositif de sécurité DS dans la base de données d'historique BDH.

Plus particulièrement, la base de données de licence BDL comprend des données de licence DonL relatives à des machines virtuelles, par exemple organisées sous forme d'une table de propriétés de licence des machines virtuelles, tel que la table Table1 ci-dessous. Cette table comprend des références de différentes propriétés des machines virtuelles, telles qu'une signature d'un agent de licence, des fonctionnalités autorisées d'applications installées et le nombre de répliques de chaque machine virtuelle qui peuvent être exécutées simultanément.

Chaque machine virtuelle peut être répliquée en des répliques de la machine virtuelle selon un nombre prédéterminé conformément à la licence payée par le client. Les répliques d'une machine virtuelle peuvent être exécutées simultanément, une réplique d'une machine virtuelle qui est exécutée peut être appelée une "instance" de la machine virtuelle.

**Table 1**

| Id VM | Signature Agent | Nombre de répliques de machine virtuelle autorisées en fonctionnement | Id Application | Fonctionnalité autorisée |
|---|---|---|---|---|
| Id1 | Sign1 | 2 | AppA | FctA1 |
| | | | | FctA2 |
| | | | AppB | FctB1 |
| | | | | FctB2 |
| | | | | FctB3 |
| Id2 | Sign2 | 1 | AppA | FctA1 |
| | | | AppC | FctC1 |
| | | | | FctC2 |

Chaque machine virtuelle est identifiée par un unique identificateur, par exemple la machine virtuelle VM₁ a un identificateur id1. L'identificateur d'une machine virtuelle peut être, par exemple, une combinaison d'une adresse MAC ("Media Access Control" en anglais) avec une donnée spécifique à la machine virtuelle. De préférence, l'identificateur n'est pas modifiable par le client utilisant le dispositif hôte. Les différentes répliques d'une même machine virtuelle sont par conséquent identifiées par l'identificateur de la machine virtuelle.

Chaque agent, embarqué dans une machine virtuelle, détient une unique signature, par exemple l'agent AG₁ a une signature Sign1. Par exemple, la signature est déterminée en utilisant une fonction de hachage et une clé privée du vendeur pendant le processus de personnalisation du dispositif de sécurité.

Chaque agent contrôle un nombre de répliques de machine virtuelle. autorisées en fonctionnement. En particulier, ce nombre indique le nombre maximal d'instances d'une machine virtuelle qui peuvent fonctionner simultanément.

Chaque application installée dans une réplique d'une machine virtuelle est identifiée par un unique identificateur. Par exemple, la machine virtuelle VM₁, identifiée par Id1, comprend deux applications AP_{1,1} et AP_{1,2}, identifiées respectivement par AppA et AppB, et peut être répliquée en deux répliques de la machine virtuelle VM₁. chaque réplique pouvant contenir au plus les deux applications identifiées par AppA et AppB.

Chaque application d'une machine virtuelle comprend des fonctionnalités pour lesquelles le client a payé une licence et qui peuvent être ainsi utilisées. Ces fonctionnalités sont identifiées chacune par un identificateur unique. Par exemple, l'application AP_{1,1} identifiée par AppA pour la machine virtuelle VM₁ peut utiliser deux fonctionnalités identifiées par FctA1 et FctA2, tandis qu'une même application AP_{2,1} identifiée par AppA pour la machine virtuelle VM₂ peut utiliser seulement la fonctionnalités identifiée par FctA1.

Par exemple, les applications respectivement identifiées par AppA, AppB et AppC correspondent respectivement à des services de serveur web, de centre de messagerie et de gestion de fichiers. La machine virtuelle VM₁, qui peut être répliquée en deux répliques fonctionnant simultanément, peut servir à la fois de serveur web et de centre de messagerie, tandis que la machine virtuelle VM₂ peut servie à la fois de serveur web et de gestionnaire de fichiers. Par contre, la machine virtuelle VM₂ ne peut pas utiliser l'application identifiée par AppB pour le centre de messagerie.

En outre, la base de données de licence BDL comprend des données de contrôle DonC relatives à des machines virtuelles, par exemple organisées sous forme d'une table, telle que la table Table2 ci-dessous. Cette table indique l'état courant de chaque réplique de machine virtuelle en fonctionnement et le nombre de lignes de cette table est limité au nombre total d'instances de machines virtuelles autorisées pour chacune des machines virtuelles.

**Table2**

| Id VM | Adresse IP de l'instance de la machine virtuelle | Date du dernier contrôle | Intervalle de temps | Etat |
|---|---|---|---|---|
| Id1 | 192.168.10.1 | 20080301_145645 | 35 | Démarré |
| Id1 | 192.168.10.2 | 20080301_150054 | 65 | Démarré |
| Id2 | 192.168.10.4 | 20080301_150054 | 57 | Démarré |

Chaque ligne de la table Table2 correspond à une instance d'une machine virtuelle, en accord avec les propriétés décrites dans la table Table1. Par exemple, la machine virtuelle VM₁, identifiée par Id1, a deux instances à l'état "Démarré". Une instance, c'est-à-dire une réplique d'une machine virtuelle, est à l'état "Démarré" dès que l'instance est en fonctionnement et lorsque l'instance est arrêtée, la ligne correspondante dans la table Table2 est supprimée.

Dès qu'une instance est à l'état "Démarré", l'adresse IP de l'instance en fonctionnement est complétée dans la table Table2. Pour chaque instance est indiquée la date du dernier contrôle des données de la licence pour cette instance, dans un format prédéterminé. Pour chaque instance est indiqué en outre un intervalle de temps, par exemple généré aléatoirement, qui détermine la prochaine date du contrôle des données de la licence.

A titre d'exemple, les instances des machines virtuelles VM₁ et VM₂ ayant respectivement les adresses IP "192.168.10.2" et "192.168.10.4" ont la même date de dernier contrôle des données de licence et des intervalles de temps différents. Les dates du prochain contrôle des données de licence pour ces instances seront donc différentes.

Selon une implémentation de l'invention, un dispositif hôte DH est fourni avec un dispositif de sécurité DS par un vendeur à un client, le dispositif de sécurité DS étant exclusivement configuré pour le dispositif hôte DH. Si le dispositif de sécurité DS n'est pas associé au dispositif hôte DH, par exemple si le dispositif DS en tant que carte à puce n'est pas inséré dans un lecteur de carte du dispositif hôte DH, un mécanisme d'authentification lors du démarrage du dispositif hôte empêche de dernier d'être démarré. Par contre, si la carte à puce est bien insérée dans le lecteur de carte, le mécanisme d'authentification permet au dispositif hôte de démarrer.

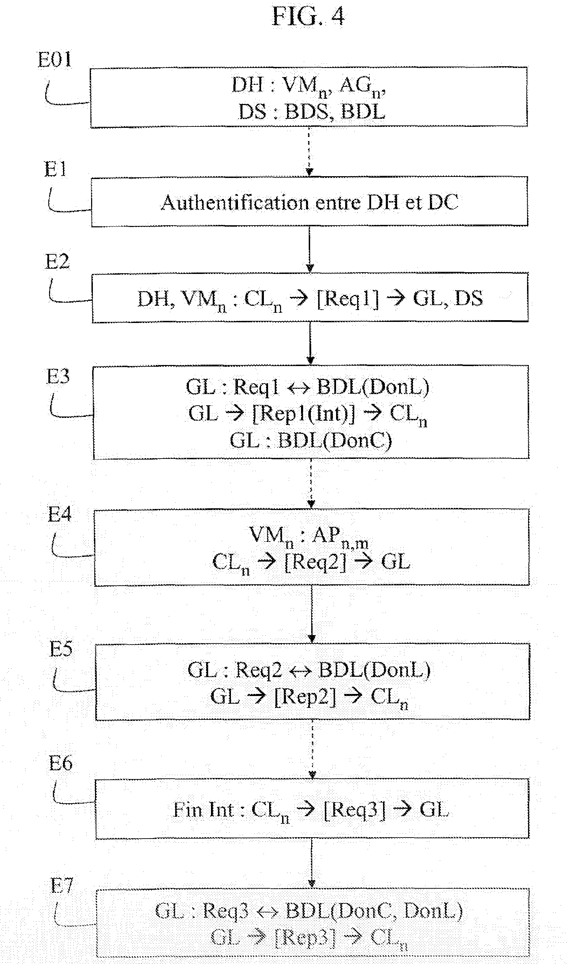

En référence à la figure 4, un procédé de contrôle de l'utilisation de machines virtuelles dans un dispositif hôte associé à un dispositif de sécurité selon l'invention comprend des étapes E1 à E7 exécutées automatiquement en partie dans le dispositif hôte DH et en partie dans le dispositif de sécurité DS selon l'invention.

A une étape préliminaire E01, un client souhaite acheter un dispositif hôte DH pouvant héberger un certain nombre de machines virtuelles, et de répliques de chaque machine virtuelle. Le vendeur personnalise un dispositif de sécurité DS, qui est par exemple une carte à puce, afin de le dédier au dispositif hôte DH. Chaque agent de licence d'une réplique d'une machine virtuelle dans le dispositif hôte est apte à communiquer avec le dispositif de sécurité, et notamment les bases de données incluses dans ce dernier. Le vendeur mémorise dans la base de données de sécurité BDS des données de sécurité relatives au dispositif de sécurité DS, telles que des clés d'authentification mutuelle, les clés privée et publique du dispositif de sécurité, la clé publique de chaque agent de licence. En fonction des exigences de fonctionnalités qui sont demandées et payées par le client, différentes licences sont également mémorisées dans la base de données de licences BDL au moyen de l'installateur de licence INS.

Pour chaque machine virtuelle VMₙ, un agent de licence AGₙ est installé avec des clés privée et publique de l'agent AGₙ, la clé publique du dispositif de sécurité et les clés d'authentification mutuelle. Le code de programmation de l'agent est masqué.

A l'issue de l'étape préliminaire E01, le dispositif hôte DH hébergeant des machines virtuelles VMₙ et le dispositif de sécurité associé sont délivrés au client. Le dispositif hôte DH est configuré pour fonctionner avec un nombre prédéfini et fixé de machines virtuelles et d'applications. Le dispositif de sécurité DS est configuré par le vendeur conformément à un nombre maximum de répliques de chaque machine virtuelle, d'applications et de fonctionnalités pour lesquelles le client a payé des licence.

A l'étape E1, le client connecte le dispositif hôte DH avec le dispositif de sécurité DS. Par exemple, si le dispositif de sécurité est une carte à puce, cette dernière est insérée dans un lecteur de carte. Lorsque le dispositif hôte est en cours de démarrage, le dispositif hôte et le dispositif de sécurité participent à un mécanisme d'authentification mutuelle à l'aide de clés d'authentification ou en utilisant un identificateur unique du dispositif hôte, tel qu'une adresse MAC. Par ailleurs. un démarrage sécurisé peut garantir l'intégrité du système d'exploitation hôte SEH et du superviseur SUP. A cette fin, au moins l'un des agents de licence AGₙ communique via le module de communication COMₙ avec le gestionnaire de licence GL, et l'agent de licence et le gestionnaire de licence échangent des clés d'authentification en interrogeant la base de données d'agent BDAₙ et la base de données de sécurité BDS.

A l'étape E2, lorsqu'une répliquées d'une machine virtuelle VMₙ est en cours de démarrage, c'est-à-dire suite au lancement de l'exécution de la réplique de la machine virtuelle. le contrôleur de licence CLₙ de l'agent de licence AGₙ associé à la réplique de la machine virtuelle VMₙ, transmet une première requête Req1 au gestionnaire de licence GL du dispositif de sécurité DS, la requête incluant la signature de l'agent, l'identificateur Idn de la machine virtuelle VMₙ, une date et éventuellement l'adresse IP de la réplique de la machines virtuelle si cette dernière est déjà configurée. Le contrôleur de licence CLₙ collabore avec le collecteur de données COₙ et interroge la base de données d'agent BDAₙ pour produire le contenu de !a première requête Req1. L'exécution de la réplique de la machine virtuelle est alors en pause tant qu'une autorisation de poursuite de l'exécution n'est pas fournie.

A l'étape E3, le gestionnaire de licence GL consulte la base de données de licence BDL, en particulier les données de licence DonL, pour effectuer deux vérifications. Le gestionnaire GL vérifie dans un premier temps si le nombre maximal d'instances de la machine virtuelle est atteint, c'est-à-dire si le nombre maximal de répliques de la machine virtuelle en fonctionnement est atteint, et vérifie dans un deuxième temps si la signature de l'agent inclus dans la première requête est valide, c'est-à-dire correspond à la signature mémorisée dans la base de données de licence BDL en correspondance avec l'identificateur Idn de la machine virtuelle VMₙ, par exemple dans la table Table1.

Si le nombre maximal d'instances de la machine virtuelle est atteint ou si la signature de l'agent n'est pas valide, le gestionnaire de licence GL transmet une commande au contrôleur de licence CLₙ pour que ce dernier arrête la réplique de la machine virtuelle VMₙ. La réplique de la machine virtuelle VMₙ est ainsi considérée comme non authentique et son utilisation est interdite.

Si le nombre maximal d'instances de la machine virtuelle n'est pas atteint et si la signature de l'agent est valide, le gestionnaire de licence GL transmet une première réponse Rep1 au contrôleur de licence CLₙ qui contient des instructions pour autoriser la réplique de la machine virtuelle VMₙ à démarrer. En particulier, la première réponse Rep1 contient un intervalle de temps Int généré aléatoirement par le générateur GEN et la première réponse Rep1 est chiffrée par le module de chiffrement CH. En outre, le gestionnaire de licence GL met à jour des données de contrôle DonC dans la base de données de licence BDL, en mémorisant en correspondance l'identificateur de la machine virtuelles, l'adresse IP de la machine virtuelle, la date de la vérification par la suite appelée date de dernier contrôle, l'intervalle de temps généré et un état "Démarré" dans la base de données de licence BDL. Par exemple, les informations précédentes sont mémorisées sous forme d'ajout d'une ligne dans la table Table2. La date de dernier contrôle correspond à la date de transmission de la première réponse Rep1 au dispositif hôte.

Par ailleurs, après avoir reçu la première réponse Rep1 transmise par le gestionnaire de licence GL et autorisé l'exécution de la réplique de la machine virtuelle VMₙ, le contrôleur de licence CLₙ transmet la valeur de l'intervalle de temps Int contenu dans la première réponse Rep1 au minuteur MINₙ afin que ce dernier détermine la date d'un prochain contrôle de licence en fonction de l'intervalle de temps Int.

A l'étape E4, la réplique de la machine virtuelle VMₙ lance l'exécution d'une application AP_{n,m}. Il est considéré que le lancement de l'exécution de l'application est consécutive au démarrage de la réplique de la machine virtuelle VMₙ et a lieu avant la date déterminée du prochain contrôle de licence.

Le contrôleur de licence CLₙ transmet une deuxième requête Req2 au gestionnaire de licence GL du dispositif de sécurité DS, la requête incluant la signature de l'agent AGₙ, identificateur de la machine virtuelle VMₙ, une date, l'adresse IP de la machine virtuelle et l'identificateur de l'application AP_{n,m}.

A l'étape E5, le gestionnaire de licence GL consulte la base de données de licence BDL, en particulier les données de licence DonL, pour vérifier que l'application AP_{n,m} à exécuter a bien une licence. A cette fin, le gestionnaire de licence GL compare les informations contenues dans la deuxième requête Req2 aux données de licence DonL correspondant à la signature de l'agent AGₙ.

Selon l'exemple avec la table Table1, au moins une partie des informations de la deuxième requête Req2 doit être conforme à l'une des lignes de la table Table1. Si la réplique de la machine virtuelle démarrée correspond à la machine virtuelle VM₁ et si l'application à exécuter est l'application de serveur web, cette dernière est autorisée à être exécutée si la deuxième requête Req2 contient notamment des éléments tels que l'identificateur de machine virtuelle Id1, la signature Sign1 et l'identificateur AppA de l'application AP_{1,1}. Si la deuxième requête ne contient pas l'un des éléments précédents, l'application de serveur web n'est pas autorisée à être exécutée.

Si l'application AP_{n,m} a une licence, le gestionnaire de licence GL génère une deuxième réponse Rep2 incluant des instructions pour l'exécution de l'application et transmet cette deuxième réponse Rep2 au contrôleur de licence CLₙ. Ce dernier, après avoir reçu la deuxième réponse Rep2, autorise le fonctionnement de l'application AP_{n,m} de la réplique de la machine virtuelle VMₙ.

Optionnellement, le gestionnaire de licence GL consulte la base de données de licence BDL pour vérifier quelles fonctionnalités de l'application AP_{n,m} sont autorisées à être utilisées. La deuxième réponse Rep2 délivre alors des droits pour l'utilisation des fonctionnalités autorisées de l'application.

A l'étape E6, le contrôleur de licence CLₙ transmet une troisième requête Req3 au gestionnaire de licence GL du dispositif de sécurité DS, la requête incluant la signature de l'agent AGₙ, l'identificateur de la machine virtuelle VMₙ, une date courante, l'adresse IP de la machine virtuelle et l'identificateur de l'application AP_{n,m}.

Plus particulièrement, à la fin de l'intervalle de temps Int, le minuteur MINₙ commande le contrôleur de licence CLₙ pour transmettre la troisième requête Req3 au gestionnaire de licence GL. La troisième requête Req3 peut contenir des identificateurs d'autres applications AP_{n,m} si ces dernières ont été lancées et exécutées avant la fin de l'intervalle de temps Int.

A l'étape E7, le gestionnaire de licence GL consulte la base de données de licence BDL, en particulier les données de contrôle DonC et les données de licence DonL. Le gestionnaire de licence GL vérifie dans un premier temps si la date courante incluse dans la troisième requête Req3 correspond à la date de prochain contrôle, à une tolérance près, obtenue en fonction de la date de dernier contrôle et l'intervalle de temps mémorisés dans la base de données de licences BDL à l'étape E3.

Si les dates ne correspondent pas, le gestionnaire de licence GL transmet une commande au contrôleur de licence CLₙ pour que ce dernier arrête la réplique de la machine virtuelle VMₙ et toutes les applications AP_{n,m} en fonctionnement.

Si les dates correspondent, le gestionnaire de licence GL vérifie que chaque application APₙ en fonctionnement a bien une licence. A cette fin, le gestionnaire de licence GL compare les informations contenues dans la troisième requête Req3 aux données de licence DonL correspondant à la signature de l'agent AGₙ.

Si le gestionnaire de licence GL détecte une anomalie dans la comparaison de données, le gestionnaire de licence GL transmet également une commande au contrôleur de licence CLₙ pour que ce dernier arrête la réplique de la machine virtuelle VMₙ et toutes les applications APₙ,ₘ en fonctionnement.

Si aucune anomalie dans la comparaison de données n'est détectée, le gestionnaire de licence GL génère une troisième réponse Rep3 délivrant des droits pour l'utilisation de chaque application, notamment pour poursuivre l'exécution de chaque application. La troisième réponse Rep3 contient un autre intervalle de temps Int' généré aléatoirement par le générateur GEN. Le gestionnaire de licence GL met à jour des données de contrôle DonC dans la base de données de licence BDL, notamment la date de dernière vérification et la valeur de l'intervalle de temps Int' correspondant à la machine virtuelle VMₙ. Le gestionnaire de licence GL transmet cette troisième réponse Rep3 au contrôleur de licence CLₙ.

Le contrôleur de licence CLₙ, après avoir reçu la troisième réponse Rep3, autorise la poursuite du fonctionnement des applications AP_{n,m} de la réplique de la machine virtuelle VMₙ et transmet la valeur de l'intervalle de temps Int' contenu dans la troisième réponse Rep3 au minuteur MINₙ afin que ce dernier détermine la date d'un prochain contrôle de licence en fonction de l'intervalle de temps Int'.

Les étapes E6 et E7 peuvent donc être réitérées à la fin de chaque intervalle de temps généré, Par conséquent, à la fin de l'intervalle de temps Int', le dispositif hôte transmet à nouveau la troisième requête Req3 au dispositif de sécurité. Au cours du temps, une ou plusieurs autres applications AP_{n,m} peuvent être lancées et dans ce cas, les étapes E4 et E5 sont exécutées pour chaque application lancée.

Le procédé est exécuté pour chaque réplique de chaque machine virtuelle qui est démarrée, Le système de contrôle de machines virtuelles effectue un contrôle de licence lorsque l'un des types d'événement suivants se produit lors du démarrage d'une réplique d'une machine virtuelle, lors du lancement d'une application, et à la fin d'un intervalle de temps généré aléatoirement.

Lorsqu'un intervalle de temps, mémorisé dans la base de données de licence BDL en correspondance avec une réplique de machine virtuelle donnée, arrive à expiration sans que le dispositif de sécurité n'ait reçu une requête de contrôle de licence depuis le dispositif hôte, les données de contrôle DonC correspondant à cette réplique de machine virtuelle donnée sont supprimées de la base de données de licence BDL.

En outre, si le dispositif de sécurité n'est plus associé au dispositif hôte, par exemple si la carte à puce en tant que dispositif de sécurité est retirée du lecteur de carte à puce, le contrôleur de licence ne reçoit plus de réponse du gestionnaire de licence. Après un délai prédéterminé, le contrôleur de licence arrête la ou les répliques de machine virtuelle en fonctionnement.

Si une réplique de machine virtuelle a été autorisée à être exécutée, la réplique de machine virtuelle est à l'état "Démarré" dans la base de données de licence BDL. Si la réplique de machine virtuelle est arrêtée puis relancée avant la fin de l'intervalle de temps, l'exécution de la réplique de la machine virtuelle peut être autorisée automatiquement du fait de son état "Démarré" dans la base de données de licence BDL.

Dans un exemple de réalisation de l'invention, si le client souhaite modifier des droits de licence, par exemple pour utiliser plus de machines virtuelles ou plus de fonctionnalités des applications, le client demande au vendeur l'obtention d'un nouveau dispositif de sécurité, le dispositif initial étant retourné au vendeur afin d'être détruit.

## Revendications

1. Procédé pour contrôler l'exécution d'au moins une réplique d'une machine virtuelle (VMₙ) dans un dispositif informatique (DH), **caractérisé en ce qu'**il comprend les étapes suivantes :
suite au lancement de l'exécution de la réplique de la machine virtuelle (VMₙ), transmettre (E2) une première requête (Req1) comprenant au moins une signature et un identificateur de la machine virtuelle depuis le dispositif informatique (DH) à un dispositif de sécurité (DS) associé au dispositif informatique, et
si le nombre de répliques de la machine virtuelle en fonctionnement est inférieur à un nombre prédéterminé, si la signature est valide et si l'identificateur de la machine virtuelle est conforme à un identificateur mémorisé dans le dispositif de sécurité (DS), transmettre (E3) une première réponse (Rep1) incluant des instructions pour autoriser l'exécution de la réplique de la machine virtuelle (VMₙ) depuis le dispositif de sécurité (DS) au dispositif informatique (DH).

2. Procédé conforme à la revendication 1, comprenant en outre les étapes suivantes :
suite au lancement de l'exécution d'une application (APₙ,ₘ) de la réplique de la machine virtuelle (VMₙ), transmettre (E4) une deuxième requête (Req2) comprenant au moins ladite signature, un identificateur de la machine virtuelle et un identificateur de l'application, depuis le dispositif informatique (DH) au dispositif de sécurité (DS), et
si la signature est valide et si les identificateurs de la machine virtuelle et de l'application sont conformes à des identificateurs mémorisés dans le dispositif de sécurité (DS), transmettre (E5) une deuxième réponse (Rep2) incluant des instructions pour autoriser l'exécution de l'application (AP_{n,m}) depuis le dispositif de sécurité (DS) au dispositif informatique (DH).

3. Procédé conforme à la revendication 1 ou 2, comprenant en outre les étapes suivantes :
à la fin d'un intervalle de temps prédéterminé (Int), transmettre (E6) une troisième requête (Req3) comprenant au moins ladite signature, un identificateur de la machine virtuelle, au moins un identificateur d'une application (AP_{n,m}) relatives à la réplique de la machine virtuelle et une date courante, depuis le dispositif informatique (DH) au dispositif de sécurité (DS), et
si la signature est valide, si les identificateurs de la machine virtuelle et de l'application sont conformes à des identificateurs mémorisés dans le dispositif de sécurité (DS), et si la date courante correspond à une date obtenue en fonction de l'intervalle de temps prédéterminé et de la date de transmission de la première réponse, transmettre (E7) une troisième réponse (Rep3) incluant des instructions pour autoriser l'exécution de l'application (AP_{n,m}) depuis le dispositif de sécurité (DS) au dispositif informatique (DH).

4. Procédé conforme à la revendication 3, selon lequel l'intervalle de temps prédéterminé (Int) est préalablement généré aléatoirement et inclus dans la première réponse (Rep1).

5. Procédé conforme à la revendication 3 ou 4, selon lequel la troisième réponse (Rep3) comprend un autre intervalle de temps (Int') généré aléatoirement à la fin duquel le dispositif informatique (DH) transmet à nouveau la troisième requête (Req3) au dispositif de sécurité (DS).

6. Procédé conforme à l'une des revendications 1 à 5, selon lequel chaque requête et chaque réponse échangées entre le dispositif informatique et le dispositif de sécurité sont chiffrées.

7. Dispositif informatique (DH) implémentant au moins une réplique d'une machine virtuelle (VMₙ), **caractérisé en ce qu'**il comprend :
des moyens (AGₙ) pour transmettre une première requête (Req1) comprenant au moins une signature et un identificateur de la machine virtuelle à un dispositif de sécurité (DS) associé au dispositif informatique (DH), et
des moyens (AGₙ) pour autoriser l'exécution de la réplique de la machine virtuelle (VMₙ) en fonction d'instructions incluses dans une première réponse (Rep1) qui est transmise par le dispositif de sécurité (DS) si le nombre de répliques de la machine virtuelle en fonctionnement est inférieur à un nombre prédéterminé, si la signature est valide et si l'identificateur de la machine virtuelle est conforme à un identificateur mémorisé dans le dispositif de sécurité (DS).

8. Dispositif de sécurité (DS) associé à un dispositif informatique (DH) implémentant au moins une réplique d'une machine virtuelle (VMₙ), **caractérisé en ce qu'**il comprend :
des moyens (GL) pour recevoir une première requête (Req1) qui comprend au moins une signature et un identificateur de la machine virtuelle et qui est transmise depuis le dispositif informatique (DH), et
des moyens (GL) pour transmettre une première réponse (Rep1) incluant des instructions pour autoriser l'exécution de la réplique de la machine virtuelle (VMₙ) au dispositif informatique (DH), si le nombre de répliques de la machine virtuelle en fonctionnement est inférieur à un nombre prédéterminé, si la signature est valide et si l'identificateur de la machine virtuelle est conforme à un identificateur mémorisé dans le dispositif de sécurité (DS).

9. Dispositif de sécurité (DS) conforme à la revendication 8, **caractérisé en ce que** le dispositif de sécurité est une carte à puce.

## Patentansprüche

1. Verfahren zur Steuerung der Ausführung von mindestens eines Replikats einer virtuellen Maschine (VMₙ) in einer Computervorrichtung (Dispositif Informatique, DH), **dadurch gekennzeichnet, dass** das Verfahren die folgenden Schritte umfasst:
im Anschluss an das Starten der Ausführung des Replikats der virtuellen Maschine (VMₙ) das Übermitteln (E2) einer ersten Anfrage (Req1), die mindestens eine Signatur und eine Kennung der virtuellen Maschine von der Computervorrichtung (DH) an eine Sicherheitsvorrichtung (Dispositif de Securite, DS) umfasst, das mit der Computervorrichtung assoziiert ist, und
wenn die Anzahl der in Betrieb befindlichen Replikate der virtuellen Maschine niedriger ist als eine vordefinierte Anzahl, wenn die Signatur validiert ist und wenn die Kennung der virtuellen Maschine mit einer Kennung übereinstimmt, die in der Sicherheitsvorrichtung (DS) gespeichert ist, das Übermitteln (E3) einer ersten Antwort (Rep1), welche Anweisungen zum Autorisieren des Ausführens des Replikats der virtuellen Maschine (VMₙ) umfasst, von der Sicherheitsvorrichtung (DS) an die Computervorrichtung (DH).

2. Verfahren nach Anspruch 1, weiterhin die folgenden Schritte umfassend:
im Anschluss an das Ausführen einer Anwendung (AP_{n,m}) des Replikats der virtuellen Maschine (VMₙ) das Übermitteln (E4) einer zweiten Anfrage (Req2), welche mindestens die besagte Signatur, eine Kennung der virtuellen Maschine und eine Kennung der Anwendung umfasst, von der Computervorrichtung (DH) an die Sicherheitsvorrichtung (DS), und
wenn die Signatur validiert ist und wenn die Kennungen der virtuellen Maschine und der Anwendung mit Kennungen übereinstimmen, die in der Sicherheitsvorrichtung (DS) gespeichert sind, das Übermitteln (E5) einer zweiten Antwort (Rep2), welche Anweisungen zum Autorisieren des Ausführens der Anwendung (APₙ,ₘ) umfasst, von der Sicherheitsvorrichtung (DS) an die Computervorrichtung (DH).

3. Verfahren nach Anspruch 1 oder 2, weiterhin unter anderem die folgenden Schritte umfassend:
am Ende eines vorbestimmten Zeitintervalls (Int) das Übermitteln (E6) einer dritten Anfrage (Req3), welche mindestens die besagte Signatur, eine Kennung der virtuellen Maschine, mindestens eine Kennung einer Anwendung (AP_{n,m}) bezüglich des Replikats der virtuellen Maschine und ein aktuelles Datum umfasst, von der Computervorrichtung (DH) zur Sicherheitsvorrichtung (DS), und
wenn die Signatur gültig ist, wenn die Kennungen der virtuellen Maschine und der Anwendung mit Kennungen übereinstimmen, die in der Sicherheitsvorrichtung (DS) gespeichert sind, und wenn das aktuelle Datum einem Datum entspricht, welches in Funktion des vorbestimmten Zeitintervalls und des Übermittlungsdatums der ersten Antwort erhalten wurde, das Übermitteln (E7) einer dritten Antwort (Rep3), welche Anweisungen zum Autorisieren der Ausführung der Anwendung (AP_{n,m}) umfasst, von der Sicherheitsvorrichtung (DS) an die Computervorrichtung (DH).

4. Verfahren nach Anspruch 3, wobei das voreingestellte Zeitintervall (Int) vorab nach dem Zufallsprinzip generiert wurde und in der ersten Antwort enthalten (Rep1) ist.

5. Verfahren nach Anspruch 3 oder 4, wobei die dritte Antwort (Rep3) ein weiteres zufallsgeneriertes Zeitintervall (Int') umfasst, nach Ablauf dessen die Computervorrichtung (DH) erneut die dritte Anfrage (Req3) an die Sicherheitsvorrichtung (DS) sendet.

6. Verfahren nach Anspruch 1 bis 5, wobei jede zwischen der Computervorrichtung und der Sicherheitsvorrichtung ausgetauschte Anfrage und Antwort verschlüsselt sind.

7. Computervorrichtung (DH), welches mindestens ein Replikat einer virtuellen Maschine (VMₙ) implementiert, **dadurch gekennzeichnet, dass** sie umfasst:
Mittel (AGₙ) für das Übermitteln einer ersten Anfrage (Req1), welche mindestens eine Signatur und eine Kennung der virtuellen Maschine umfasst, von virtuellen Maschine an eine Sicherheitsvorrichtung (DS), die mit einer Computervorrichtung (DH) assoziiert ist, und
Mittel (AGₙ) für das Autorisieren des Ausführens des Replikats der virtuellen Maschine (VMₙ) in Funktion der Anweisungen, die in einer ersten Antwort (Rep1) enthalten sind, die von der Sicherheitsvorrichtung (DS) übermittelt wird, wenn die Anzahl der in Betrieb befindlichen Replikate der virtuellen Maschine niedriger ist als eine vorbestimmte Anzahl, wenn die Signatur validiert wird und wenn die Kennung der virtuellen Maschine einer Kennung entspricht, die in der Sicherheitsvorrichtung (DS) gespeichert ist.

8. mit einer Computervorrichtung (DH) assoziierte Sicherheitsvorrichtung (DS), welche mindestens ein Replikat einer virtuellen Maschine (VMₙ) implementiert, **dadurch gekennzeichnet, dass** sie umfasst:
Mittel (GL) für den Empfang einer ersten Anfrage (Req1), welche mindestens eine Signatur und eine Kennung der virtuellen Maschine umfasst und welche von der Computervorrichtung (DH) übermittelt wird, und
Mittel (GL) zum Übermitteln einer ersten Antwort (Rep1), welche Anweisungen zum Autorisieren des Ausführens des Replikats der virtuellen Maschine (VMₙ) umfasst, an die Computervorrichtung (DH), wenn die Anzahl der Replikate der in Betrieb befindlichen virtuellen Maschinen kleiner ist als eine vorbestimmte Anzahl, wenn die Signatur gültig ist und wenn die Kennung der virtuellen Maschine mit einer Kennung übereinstimmt, die in der Sicherheitsvorrichtung (DS) gespeichert ist.

9. Sicherheitsvorrichtung (DS) nach Anspruch 8, **dadurch gekennzeichnet, dass** die Sicherheitsvorrichtung eine Chipkarte ist.

## Claims

1. A method for controlling the execution of at least one replica of a virtual machine (VMₙ) in a computing device (DH), **characterized in that** it comprises the following steps:
following the launch of the execution of the replica of the virtual machine (VMₙ), transmitting (E2) a first request (Req1) comprising at least one signature and a virtual machine identifier from the computing device (DH) to a security device (DS) associated with the computing device, and
if the number of replicas of the virtual machine in operation is less than a predetermined number, if the signature is valid and if the virtual machine identifier complies with an identifier saved in the security device (DS), transmitting (E3) a first response (Rep1) including instructions for authorizing the execution of the replica of the virtual machine (VMₙ), from the security device (DS) to the computing device (DH).

2. A method according to claim 1, further comprising the following steps:
following the launch of the execution of an application (AP_{n,m}) of the replica of the virtual machine (VMₙ), transmitting (E4) a first request (Req2) comprising at least said signature, a virtual machine identifier, and an application identifier, from the computing device (DH) to the security device (DS), and
if the signature is valid and if the virtual machine identifier complies with an identifier saved in the security device (DS), transmitting (E5) a second response (Rep2) including instructions to authorize the execution of the application (AP_{n,m}) from the security device (DS) to the computing device (DH).

3. A method according to claim 1 or 2, further comprising the following steps:
at the end of a predetermined interval of time (Int), transmitting (E6) a third request (Req3) comprising at least said signature, a virtual machine identifier, at least one identifier of an application (AP_{n,m}) relating to the replica of the virtual machine, and a current date, from the security device (DS) to the computing device (DH), and
if the signature is valid and if the virtual machine and application identifiers comply with identifiers saved in the security device (DS), and if the current date corresponds to a date obtained based on the predetermined time interval and the transmission date of the first response, transmitting (E7) a third response (Rep3) including instructions to authorize the execution of the application (AP_{n,m}) from the security device (DS) to the computing device (DH).

4. A method according to claim 3, whereby the predetermined interval of time (Int) is generated at random in advance and included in the first response (Rep1).

5. A method according to claim 3 or 4, whereby the third response (Rep3) comprises another interval of time (Int') generated at random, at the end of which the computing device (DH) again transmits the third request (Req3) to the security device (DS).

6. A method according to one of the claims 1 to 5, whereby each request and each response exchanged between the computing device and the security device are encrypted.

7. A computing device (DH) implementing at least one replica of a virtual machine (VMₙ), **characterized in that** it comprises:
means (AGₙ) for transmitting a first request (Req1) comprising at least one signature and a virtual machine identifier to a security device (DS) associated with the computing device (DH), and
means (AGₙ) for authorizing the execution of the replica of the virtual machine (VMₙ) based on instructions included in a first response (Rep1) that is transmitted by the security device (DS) if the number of replicas of the virtual machine in operation is less than a predetermined number, if the signature is valid and if the virtual machine identifier complies with an identifier saved in the security device (DS).

8. A security device (DS) associated with a computing device (DH) implementing at least one replica of a virtual machine (VMₙ), **characterized in that** it comprises:
means (GL) for receiving a first request (Req1) that comprises at least a signature and a virtual machine identifier, and which is transmitted from the computing device (DH), and
means (GL) for transmitting a first response (Rep1) including instructions for authorizing the execution of the replica of the virtual machine (VMₙ) to the computing device (DH), if the number of replicas of the virtual machine in operation is less than a predetermined number, if the signature is valid and if the virtual machine identifier complies with an identifier saved in the security device (DS).

9. A security device (DS) according to claim 8, **characterized in that** the security device is a chip card.
